(19) Europäisches Patentamt
European Patent Office
Office européen des brevets

(11) **EP 4 583 427 A1**

(12) **EUROPEAN PATENT APPLICATION**
published in accordance with Art. 153(4) EPC

(43) Date of publication:
**09.07.2025 Bulletin 2025/28**

(21) Application number: **23867462.6**

(22) Date of filing: **18.09.2023**

(51) International Patent Classification (IPC):
***H04B 10/112*** *(2013.01)*

(52) Cooperative Patent Classification (CPC):
**H04B 10/112**

(86) International application number:
**PCT/CN2023/119472**

(87) International publication number:
**WO 2024/061174 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.09.2022 CN 202211144563**

(71) Applicant: **Huawei Technologies Co., Ltd.
Shenzhen, Guangdong 518129 (CN)**

(72) Inventors:
• **ZHA, Ridong
  Shenzhen, Guangdong 518129 (CN)**
• **SUN, Shuqian
  Shenzhen, Guangdong 518129 (CN)**
• **CHEN, Fei
  Shenzhen, Guangdong 518129 (CN)**

(74) Representative: **Maiwald GmbH
Engineering
Elisenhof
Elisenstrasse 3
80335 München (DE)**

(54) **LIGHT SPOT DETECTION MODULE, OPTICAL COMMUNICATION TERMINAL, AND OPTICAL COMMUNICATION SYSTEM**

(57) This application provides a light spot detection module, applied to the field of space optical communication. A first beam splitting mirror is configured to: receive a first input light beam, and split the first input light beam into a first light beam and a second light beam. A first focusing lens group is configured to: receive the first light beam, and transmit the first light beam to a beam combining mirror. A second focusing lens group is configured to: receive the second light beam, and transmit the second light beam to the beam combining mirror. The beam combining mirror is configured to transmit the first light beam and the second light beam to a light spot detector. The light spot detector is configured to detect a first light spot formed by the first light beam, to obtain a first parameter. The first parameter is used to generate a control signal for adjusting a receiving angle of a coarse tracking and pointing mechanism. The light spot detector is configured to detect a second light spot formed by the second light beam, to obtain a second parameter. The second parameter is used to generate a control signal for adjusting a receiving angle of a fine tracking and pointing mechanism. In this application, one light spot detector is shared, so that costs of the light spot detection module can be reduced, to reduce costs of an optical communication terminal.

FIG. 1

**Description**

**TECHNICAL FIELD**

This application relates to the field of space optical communication, and in particular, to a light spot detection module, an optical communication terminal, and an optical communication system.

**BACKGROUND**

A space optical communication technology is a communication technology in which two optical communication terminals use laser light waves as carriers and use the atmosphere or vacuum as a transmission medium.

In the field of space optical communication, relative positions of the two optical communication terminals may change. Therefore, the optical communication terminal needs to acquire and track a light beam sent by a peer end, to establish a stable space communication link. Specifically, the optical communication terminal includes a coarse tracking and pointing mechanism, a fine tracking and pointing mechanism, a light spot detection module, and a processor. The coarse tracking and pointing mechanism is configured to: receive the light beam sent by the peer end, and transmit the light beam to the fine tracking and pointing mechanism. The light spot detection module is configured to receive the light beam from the fine tracking and pointing mechanism. The light spot detection module includes a beam splitter and two light spot detectors. The beam splitter is configured to split the received light beam into two light beams. One light spot detector is configured to: detect one of the light beams and output a detection result. The processor is configured to adjust a receiving angle of the coarse tracking and pointing mechanism based on the detection result. After the receiving angle of the coarse tracking and pointing mechanism is adjusted, the other light spot detector is configured to detect the other light beam. The processor is configured to adjust a receiving angle of the fine tracking and pointing mechanism based on a detection result of the other light spot detector.

In actual application, costs of the light spot detection module are high, and consequently, costs of the optical communication terminal are high.

**SUMMARY**

This application provides a light spot detection module, an optical communication terminal, and an optical communication system. One light spot detector is shared, so that costs of the light spot detection module can be reduced, to reduce costs of the optical communication terminal.

A first aspect of this application provides a light spot detection module. The light spot detection module includes a first beam splitting mirror, a first focusing lens group, a second focusing lens group, a beam combining mirror, and a light spot detector. The first beam splitting mirror is configured to: receive a first input light beam, and split the first input light beam into a first light beam and a second light beam. The first focusing lens group is configured to: receive the first light beam, and transmit the first light beam to the beam combining mirror. The second focusing lens group is configured to: receive the second light beam, and transmit the second light beam to the beam combining mirror. A focal length of the second focusing lens group is different from a focal length of the first focusing lens group. The beam combining mirror is configured to transmit the first light beam and the second light beam to the light spot detector. The light spot detector is configured to detect a first light spot formed by the first light beam, to obtain a first parameter. The first parameter is used to generate a control signal for adjusting a receiving angle of a coarse tracking and pointing mechanism. The light spot detector is configured to detect a second light spot formed by the second light beam, to obtain a second parameter. The second parameter is used to generate a control signal for adjusting a receiving angle of a fine tracking and pointing mechanism.

In this application, one light spot detector is shared, so that costs of the light spot detection module can be reduced, to reduce costs of an optical communication terminal. In addition, when the light spot detection module is used in a satellite space optical communication terminal, transmission costs of a satellite may be reduced by reducing a size, a weight, and power consumption of the light spot detection module.

In an optional manner of the first aspect, an area of the second light spot is larger than an area of the first light spot. The second parameter obtained based on the second light spot is used to adjust the receiving angle of the fine tracking and pointing mechanism. The first parameter obtained based on the first light spot is used to adjust the receiving angle of the coarse tracking and pointing mechanism. Accuracy of the receiving angle of the fine tracking and pointing mechanism needs to be higher than that of the coarse tracking and pointing mechanism. In addition, a larger light spot area indicates higher accuracy of calculating a position of a light spot centroid. Accuracy of the light spot centroid affects accuracy of adjusting the receiving angle. The accuracy of the receiving angle affects communication quality. Therefore, in this application, communication quality can be improved.

In an optional manner of the first aspect, a position of a first receiving and sending coaxial point corresponding to the first focusing lens group is different from a position of a second receiving and sending coaxial point corresponding to the second focusing lens group. After the first input light beam is acquired, a tracking frequency may be increased in a windowing mode. When the positions of the first receiving and sending coaxial point and the second receiving and sending coaxial point are different, a field of view in the windowing mode may not include the first light spot. When the field of view in the windowing mode does not include the first light spot, accuracy and efficiency of calculating the light spot centroid can be improved. Therefore, in this application, accuracy and efficiency of adjusting the receiving angle can be improved.

In an optional manner of the first aspect, a distance between the first receiving and sending coaxial point and the second receiving and sending coaxial point ranges from 20 microradians to 300 microradians (urad).

In an optional manner of the first aspect, the first beam splitting mirror is a polarization beam splitter. The beam combining mirror is a polarization beam combiner. A polarization state of the first light beam is an X polarization state. A polarization state of the second light beam is a Y polarization state.

In an optional manner of the first aspect, the light spot detection module further includes a polarization adjustment component. The polarization adjustment component is configured to adjust energy distribution of the first input light beam on X polarization and Y polarization. A ratio of energy of the first light beam to energy of the second light beam may be adjusted based on the energy distribution of the first input light beam on the X polarization and the Y polarization. The ratio of the energy of the first light beam to the energy of the second light beam is adjusted, so that accuracy of calculating the light spot centroid can be improved, to improve accuracy of adjusting the receiving angle.

In an optional manner of the first aspect, the polarization adjustment component includes two quarter-wave plates. The two quarter-wave plates are used to adjust the energy distribution of the first input light beam on the X polarization and the Y polarization, so that costs of the polarization adjustment component can be reduced, to reduce costs of the light spot detection module.

In an optional manner of the first aspect, the first beam splitting mirror and the beam combining mirror are hollow reflecting mirrors.

In an optional manner of the first aspect, the second light beam is obtained through transmission by the first beam splitting mirror. When the first beam splitting mirror is the hollow reflecting mirror, and the second light beam is obtained through transmission by the hollow reflecting mirror, the second light spot corresponding to the second light beam is a solid light spot, and the first light spot corresponding to the first light beam is a hollow light spot. The solid light spot is helpful to improve accuracy of calculating the light spot centroid. Therefore, in this application, accuracy of adjusting the receiving angle can be improved.

In an optional manner of the first aspect, the first beam splitting mirror is a beam splitter. The beam combining mirror is a beam combiner.

In an optional manner of the first aspect, power of the second light beam is less than power of the first light beam. In actual application, acquiring takes more time than tracking. The power of the first light beam is increased, so that acquiring efficiency can be improved. Therefore, in this application, efficiency of adjusting the receiving angle can be improved.

In an optional manner of the first aspect, the first beam splitting mirror is a demultiplexer. The beam combining mirror is a multiplexer. Wavelengths of the first light beam and the second light beam are different. To improve acquiring efficiency, a peer end may send a service light beam and a beacon light beam with different wavelengths, that is, the first input light beam includes the service light beam and the beacon light beam. The beacon light beam has a larger divergence angle, so the beacon light beam is easier to acquire. Therefore, in this application, acquiring efficiency can be improved, to improve efficiency of adjusting the receiving angle.

In an optional manner of the first aspect, the first light beam is an infrared ray. A wavelength of the second light beam belongs to a C band.

In an optional manner of the first aspect, the focal length of the second focusing lens group is f2. The focal length of the first focusing lens group is f1. A value range of a ratio of f2 to f1 is from 2 to 20. In this application, the first light beam and the second light beam share one light spot detector. In this application, a large field of view required for acquiring and high resolution required for tracking may be considered by controlling the ratio of f2 to f1. The large field of view required for acquiring is helpful to improve acquiring efficiency, and high resolution required for tracking is helpful to improve accuracy of calculating the light spot centroid. Therefore, in this application, accuracy and efficiency of adjusting the receiving angle can be improved.

In an optional manner of the first aspect, the light spot detection module further includes a filter. The filter is disposed between the light spot detector and the beam combining mirror. Accuracy of calculating the light spot centroid can be improved by filtering out another light beam with an interference wavelength via the filter. Therefore, in this application, accuracy of adjusting the receiving angle can be improved.

A second aspect of this application provides an optical communication terminal. The optical communication terminal includes a processor, a coarse tracking and pointing mechanism, a fine tracking and pointing mechanism, and the light spot detection module according to any one of the first aspect or the optional manners of the first aspect. The coarse tracking and pointing mechanism is configured to: receive a first input light beam, and transmit the first input light beam to the fine tracking and pointing mechanism. The fine tracking and pointing mechanism is configured to transmit the first input light beam to the light spot detection module. The light spot detection module is configured to output a first parameter and a second parameter based on the first input light beam. The processor is configured to: obtain a first control signal based on the first parameter, and control a receiving angle of the coarse tracking and pointing mechanism based on the first control signal. The processor is further configured to: obtain a second control signal based on the second parameter, and control a receiving angle of the fine tracking and pointing mechanism based on the second control signal.

In an optional manner of the second aspect, the optical communication terminal further includes a second beam splitting mirror and an optical transceiver module. The second beam splitting mirror is configured to: receive the first input light beam from the fine tracking and pointing mechanism, transmit the first input light beam to the light spot detection module, and transmit a second input light beam to the optical transceiver module. The optical transceiver module is configured to demodulate the second input light beam, to obtain an input electrical signal.

In an optional manner of the second aspect, the optical communication terminal further includes a third beam splitting mirror. The third beam splitting mirror is located between the fine tracking and pointing mechanism and the second beam splitting mirror. The optical transceiver module is further configured to transmit a first output light beam to the second beam splitting mirror. The fine tracking and pointing mechanism is further configured to: receive the first output light beam from the third beam splitting mirror, and transmit the first output light beam to the coarse tracking and pointing mechanism. The coarse tracking and pointing mechanism is further configured to output the first output light beam.

In an optional manner of the second aspect, the optical communication terminal further includes an point ahead assembly. The point ahead assembly is located between the optical transceiver module and the third beam splitting mirror. The point ahead assembly is configured to compensate for a relative direction change of two terminals within transmission period of the first output light beam at a transmit end and a receive end. Through disposing of the point ahead assembly, a probability that the peer end receives the first output light beam can be improved. Therefore, in this application, communication reliability can be improved.

In an optional manner of the second aspect, the optical communication terminal further includes a pyramid prism. The pyramid prism is configured to: receive a calibrated light beam from the optical transceiver module, and transmit the calibrated light beam to the light spot detection module. The light spot detection module is configured to output a third parameter and a fourth parameter based on the calibrated light beam. The processor is further configured to determine, based on the third parameter, a position of a first receiving and sending coaxial point corresponding to the first focusing lens group. The processor is further configured to determine, based on the fourth parameter, a position of a second receiving and sending coaxial point corresponding to the second focusing lens group. The position of the receiving and sending coaxial point is determined via the pyramid prism, so that accuracy of the position of the receiving and sending coaxial point can be improved, and accuracy of adjusting the receiving angle is improved.

In an optional manner of the second aspect, the optical communication terminal further includes an optical antenna. The optical antenna is located between the fine tracking and pointing mechanism and the coarse tracking and pointing mechanism. The optical antenna is configured to: decrease a diameter of the first input light beam, and increase a divergence angle of the first input light beam. The optical antenna may be further configured to: increase a diameter of the first output light beam, and decrease a divergence angle of the first output light beam.

A third aspect of this application provides an optical communication system. The optical communication system includes the optical communication terminal according to any one of the second aspect or the optional manners of the second aspect and another optical communication terminal. The another optical communication terminal is configured to transmit a first input light beam to the optical communication terminal. The optical communication terminal includes the coarse tracking and pointing mechanism and the fine tracking and pointing mechanism. The optical communication terminal is configured to adjust a receiving angle of the coarse tracking and pointing mechanism and a receiving angle of the fine tracking and pointing mechanism based on the first input light beam.

A fourth aspect of this application provides a method for adjusting a receiving angle. The method for adjusting a receiving angle includes the following steps: An optical communication terminal splits a first input optical signal into a first light beam and a second light beam. The first light beam and the second light beam pass through lens groups with different focal lengths. The optical communication terminal obtains a first parameter of the first light beam and a second parameter of the second light beam via a same light spot detector. The optical communication terminal obtains a first control signal based on the first parameter, and adjusts a receiving angle of a coarse tracking and pointing mechanism based on the first control signal. The optical communication terminal obtains a second control signal based on the second parameter, and adjusts a receiving angle of a fine tracking and pointing mechanism based on the second control signal.

It should be understood that there is related content in the foregoing different aspects. Therefore, the descriptions of the optional manner of any aspect may be used as content of the optional manner of another aspect. Details are not described herein again.

**BRIEF DESCRIPTION OF DRAWINGS**

FIG. 1 is a first diagram of a structure of a light spot detection module according to an embodiment of this application;
FIG. 2a is a first diagram of a structure of a light spot detector according to an embodiment of this application;
FIG. 2b is a second diagram of a structure of a light spot detector according to an embodiment of this application;
FIG. 2c is a third diagram of a structure of a light spot detector according to an embodiment of this application;
FIG. 2d is a fourth diagram of a structure of a light spot detector according to an embodiment of this application;
FIG. 3 is a second diagram of a structure of a light spot detection module according to an embodiment of this application;
FIG. 4 is a third diagram of a structure of a light spot detection module according to an embodiment of this application;
FIG. 5 is a first diagram of a structure of an optical communication terminal according to an embodiment of this application;
FIG. 6 is a fifth diagram of a structure of a light spot detector according to an embodiment of this application;
FIG. 7 is a second diagram of a structure of an optical communication terminal according to an embodiment of this application;
FIG. 8 is a third diagram of a structure of an optical communication terminal according to an embodiment of this application;
FIG. 9 is a diagram of a structure of a space optical communication system according to an embodiment of this application; and
FIG. 10 is a schematic flowchart of a method for adjusting a receiving angle according to an embodiment of this application.

**DESCRIPTION OF EMBODIMENTS**

This application provides a light spot detection module, an optical communication terminal, and an optical communication system. One light spot detector is shared, so that costs of the light spot detection module can be reduced, to reduce costs of the optical communication terminal. It should be understood that "first", "second", and the like used in this application are merely used for distinguishing and description, but should not be understood as an indication or implication of relative importance or an indication or implication of a sequence. For brevity and clarity, reference numbers and/or letters are repeated in a plurality of accompanying drawings of this application. Repetition is not indicative of a strict limiting relationship between various embodiments and/or configurations.

The light spot detection module provided in this application is applied to the field of space optical communication. In the field of space optical communication, relative positions of two optical communication terminals may change. Therefore, the optical communication terminal needs to acquire and track, by using the light spot detection module, a light beam sent by a peer end. However, a structure of the light spot detection module is complex, resulting in high costs of the light spot detection module.

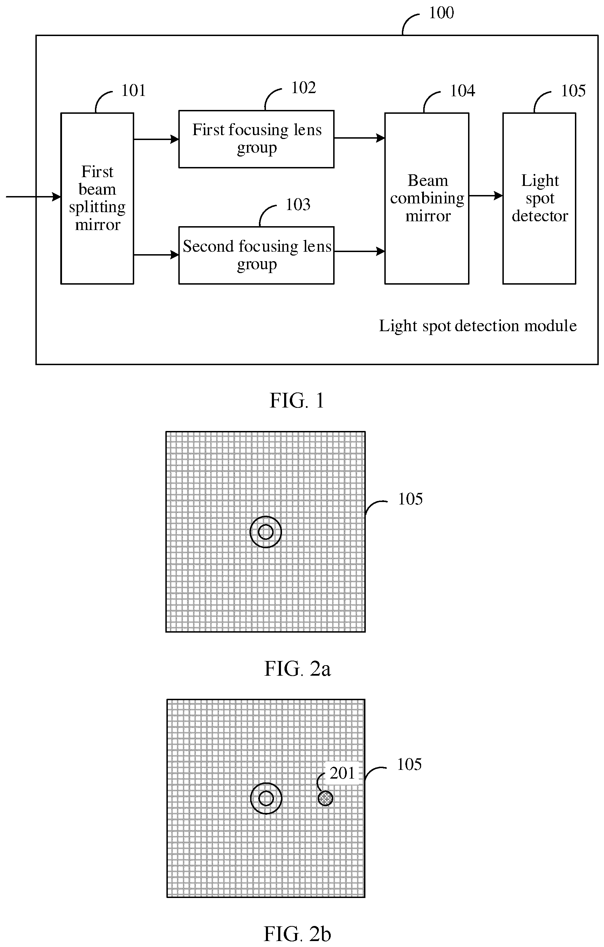

Therefore, this application provides a light spot detection module. FIG. 1 is a first diagram of a structure of the light spot detection module according to an embodiment of this application. As shown in FIG. 1, the light spot detection module 100 includes a first beam splitting mirror 101, a first focusing lens group 102, a second focusing lens group 103, a beam combining mirror 104, and a light spot detector 105.

The first beam splitting mirror 101 is configured to receive a first input light beam. The first beam splitting mirror 101 is a device that can split a first incident light beam, for example, a dichroic mirror, a beam splitter, a polarization beam splitter, or a central-hole reflecting mirror. The beam splitter may be an optical fiber beam splitter. The dichroic mirror may also be referred to as a demultiplexer. The central-hole reflecting mirror is a reflecting mirror with a hole in the middle. The central-hole reflecting mirror is also referred to as a hollow reflecting mirror, a ring reflecting mirror, or a central-hole ring reflecting mirror. The first beam splitting mirror 101 is configured to: split the first input light beam into a first light beam and a second light beam, transmit the first light beam to the first focusing lens group 102, and transmit the second light beam to the second focusing lens group 103. The first focusing lens group 102 and the second focusing lens group 103 are configured to focus light beams. The first focusing lens group 102 and the second focusing lens group 103 each may include one or more lenses, or two or more reflecting mirrors, or the like. The first focusing lens group 102 is configured to receive the first light beam. The first focusing lens group 102 is configured to transmit the first light beam to the beam combining mirror 104. The second focusing lens group 103 is configured to receive the second light beam. The second focusing lens group 103 is configured to transmit the second light beam to the beam combining mirror 104. A focal length of the second focusing lens group 103 is different from a focal length of the first focusing lens group 102.

The beam combining mirror 104 is configured to receive the first light beam and the second light beam. The beam combining mirror 104 is a device that can combine the first light beam and the second light beam, for example, a dichroic mirror, a beam combiner, a polarization beam combiner, or a central-hole reflecting mirror. The beam combiner may be an optical fiber beam combiner. The dichroic mirror may also be referred to as a multiplexer. The beam combining mirror 104 is configured to combine the first light beam and the second light beam. In this embodiment of this application, a combined light beam is still referred to as the first light beam and the second light beam. The beam combining mirror 104 is configured to transmit the first light beam and the second light beam to the light spot detector 105.

The light spot detector 105 may be a complementary metal oxide semiconductor (complementary metal oxide semiconductor, CMOS), a charge-coupled device (charge-coupled device, CCD), an electron-multiplying charge-coupled device (electron-multiplying CCD, EMCCD), an intensified charge-coupled device (intensified CCD, ICCD), a scientific complementary metal oxide semiconductor (scientific CMOS, SCMOS), a single photon avalanche diode (single photon avalanche diode, SPAD) array, or the like.

The light spot detector 105 is configured to detect, in a coarse adjustment process, a first light spot formed by the first light beam, to obtain a first parameter. The first parameter may be position information of the first light spot on the light spot detector 105. The first parameter is used to generate a control signal for adjusting a receiving angle of a coarse tracking and pointing mechanism. The light spot detector 105 is configured to detect, in a fine adjustment process, a second light spot formed by the second light beam, to obtain a second parameter. The second parameter may be position information of the second light spot on the light spot detector 105. The second parameter is used to generate a control signal for adjusting a receiving angle of a fine tracking and pointing mechanism. In actual application, a process of adjusting a receiving angle of a pointing mechanism may include calibration, acquiring, and tracking. Descriptions are separately provided below.

The calibration is to determine a position of a first receiving and sending coaxial point and a position of a second receiving and sending coaxial point on the light spot detector 105. FIG. 2a is a first diagram of a structure of the light spot detector according to an embodiment of this application. As shown in FIG. 2a, the light spot detector 105 includes positions of two receiving and sending coaxial points. The position of the first receiving and sending coaxial point is a position of a small circle. The position of the second receiving and sending coaxial point is a position of a large circle.

The acquiring is a process of detecting the first light spot on the light spot detector 105 by adjusting the receiving angle of the coarse tracking and pointing mechanism. FIG. 2b is a second diagram of a structure of the light spot detector according to an embodiment of this application. As shown in FIG. 2b, on the basis of FIG. 2a, the first light spot 201 corresponding to the first light beam may be detected by adjusting the receiving angle of the coarse tracking and pointing mechanism.

The tracking includes coarse adjustment and fine adjustment. The coarse adjustment is a process in which the receiving angle of the coarse tracking and pointing mechanism is adjusted after the first light spot is acquired, so that the light spot detector 105 detects the second light spot.

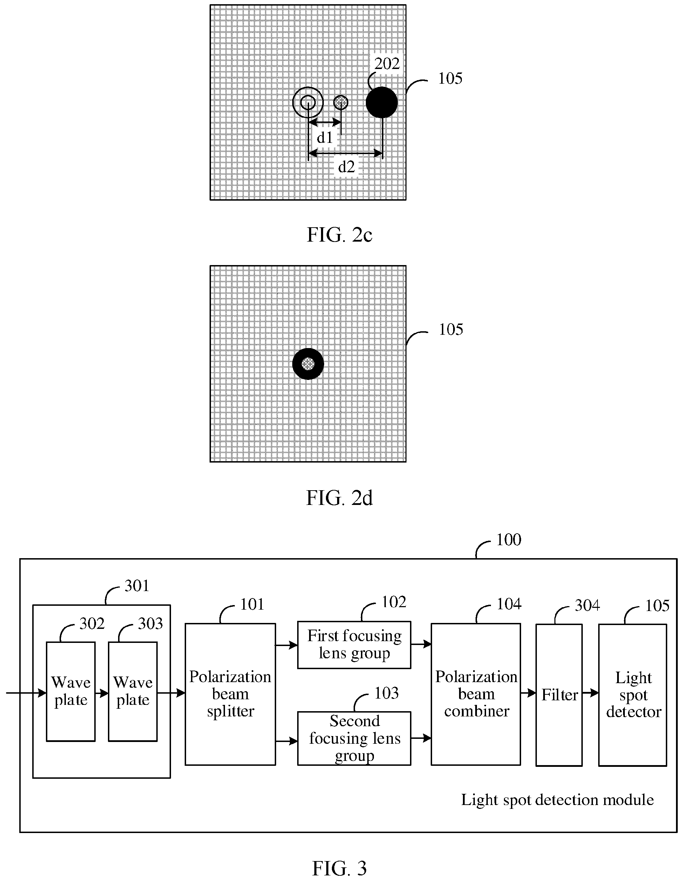

FIG. 2c is a third diagram of a structure of the light spot detector according to an embodiment of this application. As shown in FIG. 2c, on the basis of FIG. 2b, the second light spot 202 corresponding to the second light beam may be detected by adjusting the receiving angle of the coarse tracking and pointing mechanism. The fine adjustment is a process in which the receiving angle of the fine tracking and pointing mechanism is adjusted after the second light spot is acquired, so that the second light spot is close to the second receiving and sending coaxial point, and the first light spot is close to the first receiving and sending coaxial point. FIG. 2d is a fourth diagram of a structure of the light spot detector according to an embodiment of this application. As shown in FIG. 2d, the second light spot 202 is located at the position of the second receiving and sending coaxial point. The first light spot 201 is located at the position of the first receiving and sending coaxial point.

It can be learned from the foregoing descriptions that the first beam splitting mirror 101 may be a polarization beam splitter, a demultiplexer, a beam splitter, or a central-hole reflecting mirror. Descriptions are separately provided below.

The first beam splitting mirror 101 is a polarization beam splitter. FIG. 3 is a second diagram of a structure of the light spot detection module according to an embodiment of this application. As shown in FIG. 3, the first beam splitting mirror 101 is a polarization beam splitter 101. The beam combining mirror 104 is a polarization beam combiner 104. On the basis of FIG. 1, the light spot detection module 100 further includes a polarization adjustment component 301 and a filter 304.

The polarization adjustment component 301 is configured to: receive the first input light beam, and adjust energy distribution of the first input light beam on X polarization and Y polarization. In the example of FIG. 3, the polarization adjustment component 301 includes a quarter-wave plate 302 and a quarter-wave plate 303. The energy distribution of the first input light beam on the X polarization and the Y polarization may be changed by adjusting an included angle of the quarter-wave plate 302 or the quarter-wave plate 303 in a fast axis direction. The polarization adjustment component 301 is further configured to transmit the first input light beam to the polarization beam splitter 101. The X polarization and the Y polarization may be orthogonal to each other.

The polarization beam splitter 101 is configured to split the first input light beam into the first light beam and the second light beam. Both the first light beam and the second light beam are linearly polarized. A polarization state of the first light beam is an X polarization state. A polarization state of the second light beam is a Y polarization state. The polarization beam combiner 104 is configured to: receive the first light beam from the first focusing lens group 102, and receive the second light beam from the second focusing lens group 103. The polarization beam combiner 104 is configured to combine the X-polarized first light beam and the Y-polarized second light beam.

The filter 304 is located between the polarization beam combiner 104 and the light spot detector 105. It should be understood that in embodiments of this application, that A is located between B and C means that A is located on an optical path between B and C. In this case, A is not necessarily located between B and C in space. The filter 304 is configured to receive the first light beam and the second light beam from the polarization beam combiner 104. The filter 304 is configured to filter out a light beam with an interference wavelength in the first light beam and the second light beam. The filter 304 is further configured to transmit the filtered first light beam and the filtered second light beam to the light spot detector 105.

In this embodiment of this application, a ratio of energy of the first light spot to energy of the second light spot may be adjusted by adjusting energy distribution of the first input light beam on the X polarization and the Y polarization. Therefore, to improve a success rate of acquiring, energy of the first light beam may be increased in an acquiring process, that is, energy on the X polarization may be increased. Similarly, to improve accuracy of adjusting the receiving angle, energy of the second light beam may be increased in a fine adjustment process, that is, energy on the Y polarization may be increased.

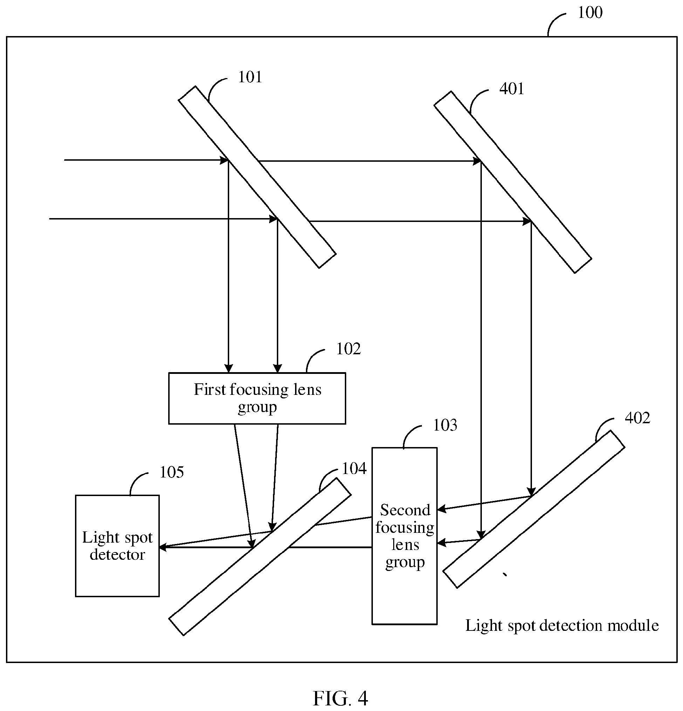

The first beam splitting mirror 101 is a demultiplexer. FIG. 4 is a third diagram of a structure of the light spot detection module according to an embodiment of this application. As shown in FIG. 4, the first beam splitting mirror 101 is a demultiplexer 101. The beam combining mirror 104 is a multiplexer 104. On the basis of FIG. 1, the light spot detection module 100 further includes a reflecting mirror 401 and a reflecting mirror 402. The demultiplexer 101 is configured to: receive the first input light beam, and split the first input light beam into the first light beam and the second light beam with different wavelengths. For example, the first light beam is an infrared ray. A wavelength of the first light beam may be 808 nanometers (nanometers, nm) or 1064 nm. A wavelength of the second light beam belongs to a C band. The wavelength of the second light beam may be 1540 nm or 1560 nm. The reflecting mirror 401 and the reflecting mirror 402 are configured to: change a transmission direction of the second light beam, and transmit the second light beam to the second focusing lens group 103. The multiplexer 104 is configured to: receive the first light beam from the first focusing lens group 102 and receive the second light beam from the second focusing lens group 103. The multiplexer 104 is configured to: combine the first light beam and the second light beam with different wavelengths, and transmit the first light beam and the second light beam to the light spot detector 105.

The first beam splitting mirror 101 is a beam splitter. In this case, the beam combining mirror 104 is a beam combiner. The beam splitter is configured to split the first input light beam into the first light beam and the second light beam based on a fixed power ratio. For example, a ratio of power of the first light beam to power of the second light beam is 1: 1. The beam combiner is configured to: combine the first light beam and the second light beam, and transmit the first light beam and the second light beam to the light spot detector 105. In this embodiment of this application, to improve a success rate of acquiring, the power of the first light beam may be greater than the power of the second light beam.

The first beam splitting mirror 101 is a central-hole reflecting mirror. In this case, the beam combining mirror 104 is also a hollow reflecting mirror. A through hole is provided in the middle of the central-hole reflecting mirror. An area of a light spot of the first input light beam irradiated on the central-hole reflecting mirror is larger than an area of the through hole. A part of the first input light beam arrives at the second focusing lens group 103 after passing through the central-hole reflecting mirror, and the other part of the light beam is reflected from the central-hole reflecting mirror to the first focusing lens group 102. The part of the light beam is also referred to as the second light beam, and the other part of the light beam is also referred to as the first light beam. In this embodiment of this application, the second light spot corresponding to the second light beam is a solid light spot, and the first light spot corresponding to the first light beam is a hollow light spot. The solid light spot is helpful to improve accuracy of calculating a light spot centroid. Therefore, in this embodiment of this application, accuracy of adjusting the receiving angle can be improved.

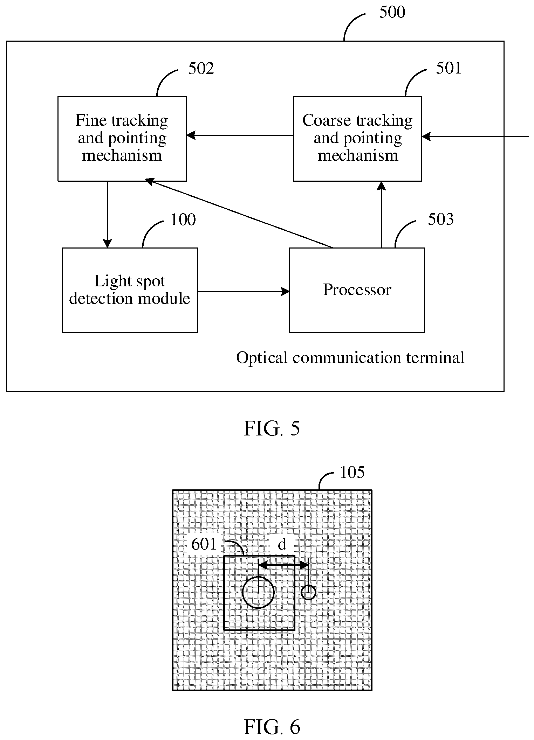

FIG. 5 is a first diagram of a structure of an optical communication terminal according to an embodiment of this application. The optical communication terminal may be referred to as an acquiring, tracking, and pointing mechanism (acquiring tracking and pointing, ATP) system. As shown in FIG. 5, the optical communication terminal 500 includes a processor 503, a coarse tracking and pointing mechanism 501, a fine tracking and pointing mechanism 502, and the light spot detection module 100.

The coarse tracking and pointing mechanism 501 may be a single-pendulum-mirror periscope structure, a double-pendulum-mirror periscope structure, a theodolite structure, a universal joint structure, a dual-optical wedge structure, a micro-electro mechanical system (micro-electro mechanical system, MEMS) micro-lens array structure, a liquid crystal on silicon (liquid crystal on silicon, LCOS) structure, or the like. The coarse tracking and pointing mechanism 501 is configured to: receive the first input light beam, and transmit the first input light beam to the fine tracking and pointing mechanism 502. The fine tracking and pointing mechanism 502 may be a vibration mirror, for example, a piezoelectric ceramic vibration mirror or a voice coil motor vibration mirror. The vibration mirror is also referred to as a fast reflecting mirror, a pendulum mirror, or a scanning mirror. The fine tracking and pointing mechanism 502 is configured to transmit the first input light beam to the light spot detection module 100. For descriptions of the light spot detection module 100, refer to the descriptions in any one of FIG. 1 to FIG. 4. The light spot detection module 100 is configured to output the first parameter and the second parameter based on the first input light beam.

The processor 503 may be a central processing unit (central processing unit, CPU), a network processor (network processor, NP), or a combination of a CPU and an NP. The processor 503 may further include a hardware chip or another general-purpose processor. The foregoing hardware chip may be an application-specific integrated circuit (application-specific integrated circuit, ASIC), a programmable logic device (programmable logic device, PLD), or a combination thereof.

The processor 503 is configured to obtain a first control signal based on the first parameter in a coarse adjustment process. For example, the first parameter includes position and shape information of the first light spot. The processor 503 calculates a position of a light spot centroid of the first light spot based on the first parameter. An algorithm for calculating the light spot centroid includes but is not limited to a grayscale weighting method, a square grayscale weighting method, a Gaussian fitting method, an elliptic fitting method, a Hough transform method, or the like. After obtaining the position of the light spot centroid through calculation, the processor 503 may be configured to obtain a spatial pointing angle r1 according to the following formula:

$$r1 = \mathrm{atan}(d1/f1)$$

f1 is the focal length of the first focusing lens group 102. As shown in FIG. 2c, d1 is a distance between the light spot centrefold of the first light spot and the first receiving and sending coaxial point. After the spatial pointing angle r1 is obtained, the processor 503 is configured to generate the first control signal based on the spatial pointing angle r1. The first control signal is used to adjust a receiving angle of the coarse tracking and pointing mechanism 501.

Similarly, the processor 503 is further configured to obtain the first control signal based on the second parameter in a fine adjustment process. For example, the second parameter includes position and shape information of the second light spot. The processor 503 calculates a position of a light spot centrefold of the second light spot based on the second parameter. After obtaining the position of the light spot centrefold through calculation, the processor 503 is configured to obtain a spatial pointing angle r2 according to the following formula:

$$r2 = \mathrm{atan}(d2/f2)$$

f2 is the focal length of the second focusing lens group 103. As shown in FIG. 2c, d2 is a distance between the light spot centrefold of the second light spot and the second receiving and sending coaxial point. After the spatial pointing angle r2 is obtained, the processor 503 is configured to generate a second control signal based on the spatial pointing angle r2. The second control signal is used to adjust a receiving angle of the fine tracking and pointing mechanism 502.

It can be learned from the foregoing descriptions that the processor 503 is configured to obtain the position of the light spot centrefold of the second light spot based on the second parameter. In actual application, a larger area of a light spot indicates higher accuracy of calculating a position of a light spot centrefold. Accuracy of the position of the light spot centrefold affects accuracy of the spatial pointing angle r2. Therefore, accuracy of the position of the light spot centrefold affects accuracy of adjusting the receiving angle. In this embodiment of this application, the first light spot is used to adjust the receiving angle of the coarse tracking and pointing mechanism 501. The second light spot is used to adjust the receiving angle of the fine tracking and pointing mechanism 502. Therefore, to improve the accuracy of adjusting the receiving angle, an area of the second light spot may be larger than an area of the first light spot.

In the fine adjustment process in this embodiment of this application, to increase a tracking frequency, a windowing mode may be enabled. A field of view in the windowing mode is smaller than an overall field of view of the light spot detector. For example, FIG. 6 is a fifth diagram of a structure of the light spot detector according to an embodiment of this application. As shown in FIG. 6, the light spot detector 105 includes positions of the two receiving and sending coaxial points. The position of the first receiving and sending coaxial point is a position of a small circle. The position of the second receiving and sending coaxial point is a position of a large circle. A center of a field of view 601 in the windowing mode is the second receiving and sending coaxial point. When the positions of the first receiving and sending coaxial point and the second receiving and sending coaxial point are different, the field of view in the windowing mode may not include the first light spot. When the field of view in the windowing mode does not include the first light spot, accuracy and efficiency of calculating the light spot centrefold can be improved. Therefore, in this embodiment of this application, accuracy and efficiency of adjusting the receiving angle can be improved.

In FIG. 6, a distance between the first receiving and sending coaxial point and the second receiving and sending coaxial point is d. A unit of d is a length unit. In actual application, the distance between the first receiving and sending coaxial point and the second receiving and sending coaxial point is also represented as d/f2. f2 is the focal length of the second focusing lens group 103. In this case, a unit of d/f2 is an angle unit. To consider both the windowing mode and an acquiring process in a tracking process, a value range of d/f2 can be appropriately controlled. For example, the value range of d/f2 is from 20 urad to 300 urad. A value of d/f2 may be 20 urad or 300 urad. In the example in FIG. 4, a value of d may be adjusted by adjusting upper and lower positions of the reflecting mirror 402 or the multiplexer 104. Alternatively, a value of d may be adjusted by adjusting left and right positions of the multiplexer 104.

In actual application, small angular resolution is required for fine adjustment. A large field of view is required for acquiring. A field of view required for acquiring and angular resolution required for fine adjustment may be controlled by adjusting the focal lengths of the first focusing lens group 102 and the second focusing lens group 103. Table 1 is an example of the angular resolution and a size of the field of view provided in this application. As shown in Table 1, a pixel size of the light spot detector 105 is 512*512. The focal length of the first focusing lens group 102 is f1. The focal length of the second focusing lens group 103 is f2. A ratio of f1 to f2 is n. The first light spot may be applied to an acquiring process. In this case, a size of a field of view of the light spot detector 105 for the first light spot is 5 millidians (mrad). Angular resolution of the light spot detector 105 for the first light spot is 0.4n urad. The second light spot is applied to a fine adjustment process. In this case, a size of a field of view of the light spot detector 105 for the second light spot is 5/n mrad. Angular resolution of the light spot detector 105 for the second light spot is 0.4 urad.

Table 1

| 512*512 pixels | Focal length | Field of view | Angular resolution | Light spot area |
| --- | --- | --- | --- | --- |
| Second light spot | f2 | 5/n mrad | 0.4 urad | b2 |
| First light spot | f1 | 5 mrad | 0.4n urad | b1 |

In Table 1, the light spot area of the first light spot is b1. The light spot area of the second light spot is b2. A light spot area is related to a focal length of a lens group, a distance between the lens group and the light spot detector, and an initial light spot area. The initial light spot area is the light spot area of the first light beam and the light spot area of the second light beam. The initial light spot area is related to the first beam splitting mirror 101. In the foregoing example, when the first beam splitting mirror 101 is a hollow reflecting mirror, an initial light spot area of the first light beam is larger than an initial light spot area of the second light beam. When the first beam splitting mirror 101 is a polarization beam splitter, an initial light spot area of the first light beam is equal to an initial light spot area of the second light beam.

It can be learned from the foregoing descriptions that, to improve accuracy of adjusting the receiving angle, the area of the second light spot b2 may be larger than the area of the first light spot b1. An area of a light spot is related to the focal length ratio n. In addition, the focal length ratio is related to a size of a field of view and a value of angular resolution. Therefore, in this embodiment of this application, a value of the area, the size of the field of view, and the value of the angular resolution of the light spot may be controlled by setting an appropriate value of n. For example, a value range of n may be from 2 to 20. A value of n may be 2 or 20.

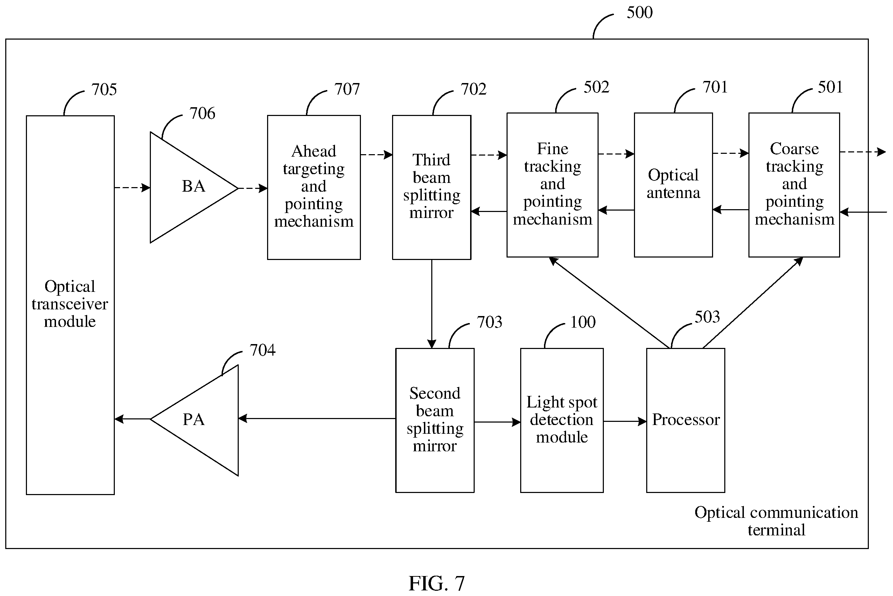

FIG. 7 is a second diagram of a structure of the optical communication terminal according to an embodiment of this application. As shown in FIG. 7, the optical communication terminal 500 includes the coarse tracking and pointing mechanism 501, an optical antenna 701, the fine tracking and pointing mechanism 502, a third beam splitting mirror 702, a second beam splitting mirror 703, the light spot detection module 100, the processor 503, a pre-amplifier (pre-amplifier, PA) 704, an optical transceiver module 705, a booster amplifier (booster amplifier, BA) 706, and a point ahead assembly 707.

For descriptions of the coarse tracking and pointing mechanism 501, the fine tracking and pointing mechanism 502, the light spot detection module 100, and the processor 504, refer to the foregoing descriptions in FIG. 5. In FIG. 7, the first input light beam is indicated by a solid arrow. The coarse tracking and pointing mechanism 501 is configured to: receive the first input light beam, and transmit the first input light beam to the optical antenna 701.

The optical antenna 701 is located between the fine tracking and pointing mechanism 502 and the coarse tracking and pointing mechanism 501. A structure of the optical antenna 701 may be a coaxial structure, an off-axis structure, a transmissive structure, or a reflective structure. The optical antenna 701 is configured to: decrease a diameter of the first input light beam, and increase a divergence angle of the first input light beam. The optical antenna 701 is further configured to transmit the first input light beam to the fine tracking and pointing mechanism 502. The fine tracking and pointing mechanism 502 is configured to transmit the first input light beam to the third beam splitting mirror 702.

The third beam splitting mirror 702 is located between the fine tracking and pointing mechanism 502 and the second beam splitting mirror 703. The third beam splitting mirror 702 is configured to: receive the first input light beam from the fine tracking and pointing mechanism 502, and transmit the first input light beam to the second beam splitting mirror 703.

The second beam splitting mirror 703 is configured to: receive the first input light beam from the third beam splitting mirror 702, and obtain a second input light beam based on the first input light beam. The second beam splitting mirror 703 is further configured to transmit the first input light beam to the light spot detection module 100. The light spot detection module 100 is configured to: obtain the first parameter and the second parameter based on the first input light beam, and transmit the first parameter and the second parameter to the processor 503. The processor 503 is configured to: obtain the first control signal based on the first parameter, and adjust the receiving angle of the coarse tracking and pointing mechanism 501 based on the first control signal. The processor 503 is further configured to obtain: a second control signal based on the second parameter, and adjust the receiving angle of the fine tracking and pointing mechanism 502 based on the second control signal. The second beam splitting mirror 703 is further configured to transmit the second input light beam to the PA 704.

The PA 704 is configured to: receive the second input light beam from the second beam splitting mirror 703, and amplify power of the second input light beam. The PA 704 is further configured to transmit the second input light beam to the optical transceiver module 705. The optical transceiver module 705 is configured to demodulate the second input light beam, to obtain an input electrical signal. The optical transceiver module 705 may be further configured to: modulate the output electrical signal to obtain a first output light beam, and transmit the first output light beam to the BA 706. The first output light beam may also be referred to as a service light beam. In FIG. 7, the first output light beam is indicated by a dashed arrow. The BA 706 is configured to: receive the first output light beam from the optical transceiver module 705, and amplify power of the first output light beam. The BA 706 is further configured to transmit the first output light beam to the point ahead assembly 707.

The point ahead assembly 707 is located between the BA 706 and the third beam splitting mirror 702. The point ahead assembly 707 is configured to receive the first output light beam from the BA 706. The point ahead assembly 707 is configured to adjust an output angle of the first output light beam. The point ahead assembly 707 is further configured to transmit the first output light beam to the third beam splitting mirror 702.

The third beam splitting mirror 702 is further configured to: receive the first output light beam from the point ahead assembly 707, and transmit the first output light beam to the fine tracking and pointing mechanism 502. The fine tracking and pointing mechanism 502 is further configured to: receive the first output light beam from the third beam splitting mirror 702, and transmit the first output light beam to the optical antenna 701. The optical antenna 701 may be further configured to: increase a diameter of the first output light beam, and decrease a divergence angle of the first output light beam. The optical antenna 701 is further configured to transmit the first output light beam to the coarse tracking and pointing mechanism 501. The coarse tracking and pointing mechanism 501 is further configured to output the first output light beam.

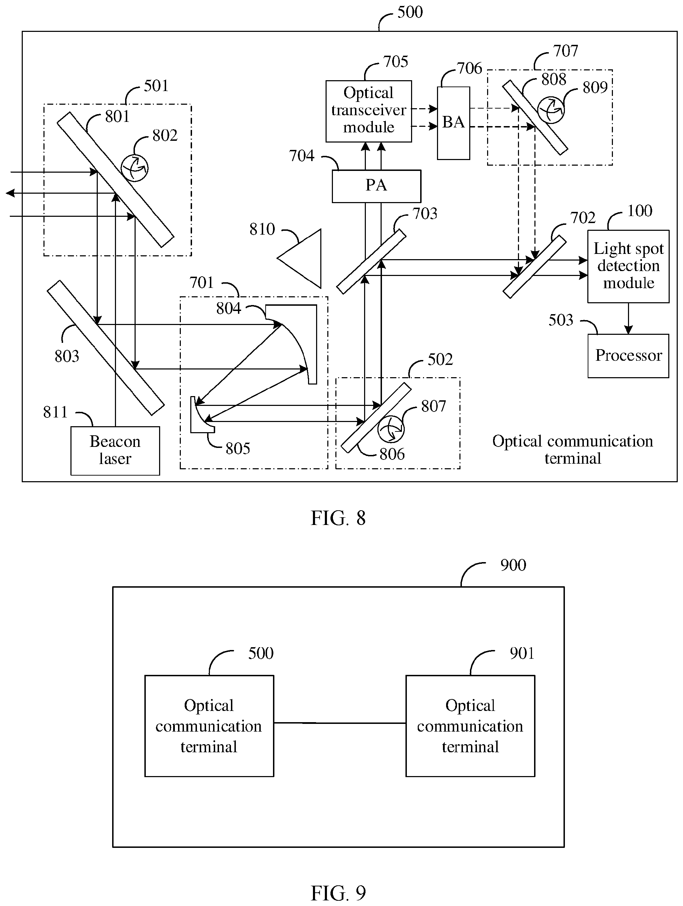

FIG. 8 is a third diagram of a structure of the optical communication terminal according to an embodiment of this application. As shown in FIG. 8, on the basis of FIG. 7, the coarse tracking and pointing mechanism 501 includes a reflecting mirror 801 and an adjustment mechanism 802. In FIG. 8, the first input light beam is indicated by two solid arrows. The reflecting mirror 801 is configured to reflect the first input light beam. The adjustment mechanism 802 is configured to adjust a receiving angle of the reflecting mirror 801 based on the first control signal. Similarly, the fine tracking and pointing mechanism 502 includes a reflecting mirror 806 and an adjustment mechanism 807. The reflecting mirror 806 is configured to reflect the first input light beam. The adjustment mechanism 807 is configured to adjust a receiving angle of the reflecting mirror 806 based on the second control signal. The point ahead assembly 707 includes a reflecting mirror 808 and an adjustment mechanism 809. The reflecting mirror 808 is configured to reflect the first output light beam. In FIG. 8, the first output light beam is indicated by two dashed arrows. The adjustment mechanism 809 is configured to adjust a receiving angle of the reflecting mirror 808 based on a control signal. The control signal may be obtained based on a distance between the optical communication terminal and a peer end, and a movement speed and a direction of the peer end. The optical antenna 701 includes a primary mirror 804 and a secondary mirror 805. The optical antenna 701 is configured to: decrease the diameter of the first input light beam, and increase the divergence angle of the first input light beam.

In FIG. 8, the optical communication terminal 500 further includes a reflecting mirror 803, a pyramid prism 810, and a beacon laser 811. The reflecting mirror 803 is configured to change a transmission angle of the first input light beam.

The pyramid prism 810 is configured to receive a calibrated light beam from the optical transceiver module 705. Specifically, the first output light beam output by the optical transceiver module 705 may arrive at the second beam splitting mirror 703 after passing through the BA 706, the point ahead assembly 707, and the third beam splitting mirror 702. The second beam splitting mirror 703 may transmit a part of the first output light beam. A shutter may be disposed between the pyramid prism 810 and the second beam splitting mirror 703. When the shutter is open, the pyramid prism 810 may receive the transmitted first output light beam from the second beam splitting mirror 703. In this case, the transmitted first output light beam is also referred to as a calibrated light beam.

The pyramid prism 810 is further configured to transmit the calibrated light beam to the second beam splitting mirror 703. The second beam splitting mirror 703 is further configured to transmit the calibrated light beam to the third beam splitting mirror 702. The third beam splitting mirror 702 is further configured to transmit the calibrated light beam to the light spot detection module 100. The light spot detection module 100 is configured to determine the positions of the first receiving and sending coaxial point and the second receiving and sending coaxial point based on the calibrated light beam. For example, the light spot detection module 100 is configured to output a third parameter and a fourth parameter based on the calibrated light beam. For descriptions of outputting the third parameter and the fourth parameter by the light spot detection module 100 based on the calibrated light beam, refer to the foregoing descriptions of outputting the first parameter and the second parameter by the light spot detection module 100 based on the first input light beam. The processor 503 is further configured to determine, based on the third parameter, the position of the first receiving and sending coaxial point corresponding to the first focusing lens group 102. The processor 503 is further configured to determine, based on the fourth parameter, the position of the second receiving and sending coaxial point corresponding to the second focusing lens group 103. The third parameter is obtained based on a third light spot. The fourth parameter is obtained based on a fourth light spot. "Corresponding to the first focusing lens group 102" means that a light beam forming the third light spot passes through the first focusing lens group 102. "Corresponding to the second focusing lens group 103" means that a light beam forming the fourth light spot passes through the second focusing lens group 103. The beacon laser 811 is configured to output a beacon light beam. The coarse tracking and pointing mechanism 501 is further configured to output the beacon light beam. In the example of FIG. 4, the first input light beam includes the first light beam and the second light beam with different wavelengths. The first light beam may be a beacon light beam output by the peer end. The second light beam may be the first output light beam output by the peer end. Similarly, the beacon light beam output by the optical communication terminal 500 may be used as the first light beam received by the peer end. The first output light beam output by the optical communication terminal 500 may be used as the second light beam received by the peer end.

In FIG. 8, functions of the second beam splitting mirror 703 and the third beam splitting mirror 702 are different from positions and functions of the second beam splitting mirror 703 and the third beam splitting mirror 702 in FIG. 7. In FIG. 8, the second beam splitting mirror 703 is located between the third beam splitting mirror 702 and the fine tracking and pointing mechanism 502. The second beam splitting mirror 703 is configured to: receive the first input light beam from the fine tracking and pointing mechanism 502, and transmit the first input light beam to the PA 704. The third beam splitting mirror 702 is located between the point ahead assembly 707 and the second beam splitting mirror 703. The third beam splitting mirror 702 is configured to: receive the first output light beam from the point ahead assembly 707, and transmit the first output light beam to the second beam splitting mirror 703. The second beam splitting mirror 703 is further configured to: receive the first output light beam from the third beam splitting mirror 702, and transmit the first output light beam to the point ahead assembly 707.

It should be understood that FIG. 1 to FIG. 8 are merely several examples provided in embodiments of this application. In actual application, a person skilled in the art may adaptively modify the light spot detection module 100 or the optical communication terminal 500 based on a requirement. For example, in the example in FIG. 4, the light spot detection module 100 further includes the filter 304. The filter 304 is located between the multiplexer 104 and the light spot detector 105. The filter 304 is configured to filter out a light beam with the interference wavelength in the first light beam and the second light beam. For another example, in FIG. 7, the optical communication terminal 500 further includes the beacon laser 811 and the pyramid prism 810.

In actual application, the optical communication terminal 500 may further include a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store an input electrical signal or an output electrical signal.

FIG. 9 is a diagram of a structure of an optical communication system according to an embodiment of this application. As shown in FIG. 9, the optical communication system 900 includes optical communication terminals, including the optical communication terminal 500 and another optical communication terminal 901. The another optical communication terminal 901 is configured to transmit a first input light beam to the optical communication terminal 500. The optical communication terminal 500 includes a coarse tracking and pointing mechanism and a fine tracking and pointing mechanism. The optical communication terminal 500 is configured to adjust a receiving angle of the coarse tracking and pointing mechanism and a receiving angle of the fine tracking and pointing mechanism based on the first input light beam. For descriptions of the optical communication terminal 500, refer to the foregoing descriptions of FIG. 5, FIG. 7, or FIG. 8. In FIG. 9, the optical communication terminal 500 serves as a peer end of the another optical communication terminal 901. The other optical communication terminal 901 serves as a peer end of the optical communication terminal 500. Therefore, for the descriptions of the another optical communication terminal 901, refer to the descriptions of the optical communication terminal 500.

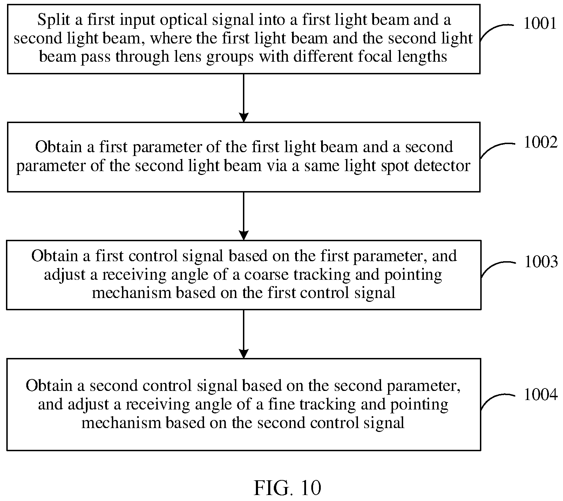

FIG. 10 is a schematic flowchart of a method for adjusting a receiving angle according to an embodiment of this application. As shown in FIG. 10, the method for adjusting a receiving angle includes the following steps.

In step 1001, an optical communication terminal splits a first input optical signal into a first light beam and a second light beam. The optical communication terminal may split the first input optical signal into the first light beam and the second light beam via a first beam splitting mirror. The first beam splitting mirror may be a dichroic mirror, a beam splitter, a polarization beam splitter, a central-hole reflecting mirror, or the like. The first light beam and the second light beam pass through lens groups with different focal lengths. For example, the first light beam passes through a first focusing lens group. A focal length of the first focusing lens group is $f1$. The second light beam passes through a second focusing lens group. A focal length of the second focusing lens group is $f2$.

In step 1002, the optical communication terminal obtains a first parameter of the first light beam and a second parameter of the second light beam via a same light spot detector. The first parameter may be position information of a first light spot on the light spot detector. The second parameter may be position information of a second light spot on the light spot detector.

In step 1003, the optical communication terminal obtains a first control signal based on the first parameter, and adjusts a receiving angle of a coarse tracking and pointing mechanism based on the first control signal. The first parameter includes position and shape information of the first light spot. The optical communication terminal may calculate a position of a light spot centroid of the first light spot based on the first parameter. After the position of the light spot centroid is obtained through calculation, the optical communication terminal may calculate a space direction angle r1 by using f1 and d1. Herein, f1 is the focal length of the first focusing lens group, and d1 is a distance between the light spot centroid of the first light spot and a first receiving and sending coaxial point. After obtaining the space direction angle r1, the optical communication terminal generates the first control signal based on the space direction angle r1, and adjusts the receiving angle of the coarse tracking and pointing mechanism based on the first control signal.

In step 1004, the optical communication terminal obtains a second control signal based on the second parameter, and adjusts a receiving angle of a fine tracking and pointing mechanism based on the second control signal. For descriptions of step 1004, refer to the descriptions of step 1003.

It should be understood that descriptions of the method for adjusting a receiving angle are similar to the foregoing descriptions of the light spot detection module 100 or the optical communication terminal 500. Therefore, for the descriptions of the method for adjusting a receiving angle, refer to the foregoing descriptions of the light spot detection module 100 or the optical communication terminal 500. For example, an area of the second light spot is larger than an area of the first light spot. For another example, the optical communication terminal is further configured to: split a calibrated light beam into two light beams, and determine positions of a first receiving and sending coaxial point and a second receiving and sending coaxial point respectively based on the two light beams.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A light spot detection module, comprising a first beam splitting mirror, a first focusing lens group, a second focusing lens group, a beam combining mirror, and a light spot detector, wherein

   the first beam splitting mirror is configured to: receive a first input light beam, and split the first input light beam into a first light beam and a second light beam;
   the first focusing lens group is configured to: receive the first light beam, and transmit the first light beam to the beam combining mirror;
   the second focusing lens group is configured to: receive the second light beam, and transmit the second light beam to the beam combining mirror, wherein a focal length of the second focusing lens group is different from a focal length of the first focusing lens group;
   the beam combining mirror is configured to transmit the first light beam and the second light beam to the light spot detector;
   the light spot detector is configured to detect a first light spot formed by the first light beam, to obtain a first parameter, wherein the first parameter is used to generate a control signal for adjusting a receiving angle of a coarse tracking and pointing mechanism; and
   the light spot detector is configured to detect a second light spot formed by the second light beam, to obtain a second parameter, wherein the second parameter is used to generate a control signal for adjusting a receiving angle of a fine tracking and pointing mechanism.

2. The light spot detection module according to claim 1, wherein an area of the second light spot is larger than an area of the first light spot.

3. The light spot detection module according to claim 1 or 2, wherein a position of a first receiving and sending coaxial point corresponding to the first focusing lens group is different from a position of a second receiving and sending coaxial point corresponding to the second focusing lens group.

4. The light spot detection module according to claim 3, wherein a distance between the first receiving and sending coaxial point and the second receiving and sending coaxial point ranges from 20 microradians to 300 microradians.

5. The light spot detection module according to any one of claims 1 to 4, wherein the first beam splitting mirror is a polarization beam splitter, the beam combining mirror is a polarization beam combiner, a polarization state of the first light beam is an X polarization state, and a polarization state of the second light beam is a Y polarization state.

6. The light spot detection module according to claim 5, wherein the light spot detection module further comprises a polarization adjustment component; and
the polarization adjustment component is configured to adjust energy distribution of the first input light beam on X polarization and Y polarization.

7. The light spot detection module according to claim 6, wherein the polarization adjustment component comprises two quarter-wave plates.

8. The light spot detection module according to any one of claims 1 to 4, wherein the first beam splitting mirror and the beam combining mirror are hollow reflecting mirrors.

9. The light spot detection module according to claim 8, wherein the second light beam is obtained through transmission by the first beam splitting mirror.

10. The light spot detection module according to any one of claims 1 to 4, wherein the first beam splitting mirror is a beam splitter, and the beam combining mirror is a beam combiner.

11. The light spot detection module according to claim 10, wherein power of the second light beam is less than power of the first light beam.

12. The light spot detection module according to any one of claims 1 to 4, wherein the first beam splitting mirror is a demultiplexer, the beam combining mirror is a multiplexer, and a wavelength of the first light beam is different from a wavelength of the second light beam.

13. The light spot detection module according to claim 12, wherein the first light beam is an infrared ray, and the wavelength of the second light beam belongs to a C band.

14. The light spot detection module according to any one of claims 1 to 13, wherein the focal length of the second focusing lens group is f2, the focal length of the first focusing lens group is f1, and a value range of a ratio of f2 to f1 is from 2 to 20.

15. The light spot detection module according to any one of claims 1 to 14, wherein the light spot detection module further comprises a filter, and the filter is disposed between the light spot detector and the beam combining mirror.

16. An optical communication terminal, comprising a processor, a coarse tracking and pointing mechanism, a fine tracking and pointing mechanism, and the light spot detection module according to any one of claims 1 to 15, wherein

the coarse tracking and pointing mechanism is configured to: receive a first input light beam, and transmit the first input light beam to the fine tracking and pointing mechanism;
the fine tracking and pointing mechanism is configured to transmit the first input light beam to the light spot detection module;
the light spot detection module is configured to output a first parameter and a second parameter based on the first input light beam;
the processor is configured to: obtain a first control signal based on the first parameter, and control a receiving angle of the coarse tracking and pointing mechanism based on the first control signal; and
the processor is further configured to: obtain a second control signal based on the second parameter, and control a receiving angle of the fine tracking and pointing mechanism based on the second control signal.

17. The optical communication terminal according to claim 16, wherein the optical communication terminal further comprises a second beam splitting mirror and an optical transceiver module;

the second beam splitting mirror is configured to: receive the first input light beam from the fine tracking and pointing mechanism, transmit the first input light beam to the light spot detection module, and transmit a second input light beam to the optical transceiver module; and
the optical transceiver module is configured to demodulate the second input light beam, to obtain an input electrical signal.

18. The optical communication terminal according to claim 17, wherein the optical communication terminal further comprises a third beam splitting mirror, and the third beam splitting mirror is located between the fine tracking and pointing mechanism and the second beam splitting mirror;

the optical transceiver module is further configured to transmit a first output light beam to the third beam splitting mirror;
the fine tracking and pointing mechanism is further configured to: receive the first output light beam from the third beam splitting mirror, and transmit the first output light beam to the coarse tracking and pointing mechanism; and
the coarse tracking and pointing mechanism is further configured to output the first output light beam.

19. The optical communication terminal according to claim 18, wherein the optical communication terminal further comprises a point ahead assembly, and the point ahead assembly is located between the optical transceiver module and the third beam splitting mirror.

20. The optical communication terminal according to any one of claims 16 to 19, wherein the optical communication terminal further comprises a pyramid prism;

the pyramid prism is configured to: receive a calibrated light beam from the optical transceiver module, and transmit the calibrated light beam to the light spot detection module;
the light spot detection module is configured to output a third parameter and a fourth parameter based on the calibrated light beam;
the processor is further configured to determine a position of a first receiving and sending coaxial point of the first focusing lens group on the light spot detector based on the third parameter; and
the processor is further configured to determine a position of a second receiving and sending coaxial point of the second focusing lens group on the light spot detector based on the fourth parameter.

21. The optical communication terminal according to any one of claims 16 to 20, wherein the optical communication terminal further comprises an optical antenna, and the optical antenna is located between the fine tracking and pointing mechanism and the coarse tracking and pointing mechanism.

22. An optical communication system, comprising the optical communication terminal according to any one of claims 16 to 21 and another optical communication terminal, wherein

the another optical communication terminal is configured to transmit a first input light beam to the optical communication terminal; and
the optical communication terminal comprises the coarse tracking and pointing mechanism and the fine tracking and pointing mechanism, and the optical communication terminal is configured to adjust receiving angles of the coarse tracking and pointing mechanism and the fine tracking and pointing mechanism based on the first input light beam.

FIG. 1

FIG. 2a

FIG. 2b

FIG. 2c

FIG. 2d

FIG. 3

100

101    401

102

First focusing lens
group

105    103
104    402

Light spot
detector

Second
focusing
lens
group

Light spot detection module

FIG. 4

500

502 501

Fine tracking and pointing mechanism ← Coarse tracking and pointing mechanism ←

100 503

Light spot detection module → Processor

Optical communication terminal

FIG. 5

105

601 d

FIG. 6

FIG. 7

FIG. 8

FIG. 9

Split a first input optical signal into a first light beam and a second light beam, where the first light beam and the second light beam pass through lens groups with different focal lengths ⟍ 1001

Obtain a first parameter of the first light beam and a second parameter of the second light beam via a same light spot detector ⟍ 1002

Obtain a first control signal based on the first parameter, and adjust a receiving angle of a coarse tracking and pointing mechanism based on the first control signal ⟍ 1003

Obtain a second control signal based on the second parameter, and adjust a receiving angle of a fine tracking and pointing mechanism based on the second control signal ⟍ 1004

FIG. 10

**EP 4 583 427 A1**

## INTERNATIONAL SEARCH REPORT

| | International application No. |
|---|---|
| | **PCT/CN2023/119472** |

**A. CLASSIFICATION OF SUBJECT MATTER**

H04B 10/112(2013.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXTC: 粗跟踪, 分波, 分光, 分束, 共享, 共用, 光斑, 光束, 合束, 焦距, 精跟踪, 探测器, spectroscope, light path, tracking, detector, focus, laser

**C. DOCUMENTS CONSIDERED TO BE RELEVANT**

| Category* | Citation of document, with indication, where appropriate, of the relevant passages | Relevant to claim No. |
|---|---|---|
| X | CN 114739903 A (SHANGHAI PRECISION MEASUREMENT SEMICONDUCTOR TECHNOLOGY, INC.) 12 July 2022 (2022-07-12) description, paragraphs 34-77, and figures 1-6 | 1-15 |
| Y | CN 114739903 A (SHANGHAI PRECISION MEASUREMENT SEMICONDUCTOR TECHNOLOGY, INC.) 12 July 2022 (2022-07-12) description, paragraphs 34-77, and figures 1-6 | 16-22 |
| Y | WO 2022052431 A1 (XI'AN INSTITUTE OF OPTICS AND PRECISION MECHANICS, CHINESE ACADEMY OF SCIENCES) 17 March 2022 (2022-03-17) description, page 9, line 10 to page 10, line 1, and figure 1 | 16-22 |
| A | WO 2022148136 A1 (HUAWEI TECHNOLOGIES CO., LTD.) 14 July 2022 (2022-07-14) entire document | 1-22 |
| A | CN 114543689 A (SHANGHAI PRECISION MEASUREMENT SEMICONDUCTOR TECHNOLOGY, INC.) 27 May 2022 (2022-05-27) entire document | 1-22 |

✓ Further documents are listed in the continuation of Box C.  ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 November 2023** | **10 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/119472** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114142927 A (BEIJING LASER STARCOM TECHNOLOGY CO., LTD.) 04 March 2022 (2022-03-04)<br>       entire document | 1-22 |

Form PCT/ISA/210 (second sheet) (July 2022)

**INTERNATIONAL SEARCH REPORT**
Information on patent family members

International application No.

**PCT/CN2023/119472**

| Patent document cited in search report | | | Publication date (day/month/year) | Patent family member(s) | | | Publication date (day/month/year) |
|---|---|---|---|---|---|---|---|
| CN | 114739903 | A | 12 July 2022 | None | | | |
| WO | 2022052431 | A1 | 17 March 2022 | CN | 112213872 | A | 12 January 2021 |
| WO | 2022148136 | A1 | 14 July 2022 | EP | 4261571 | A1 | 18 October 2023 |
| | | | | CN | 114720958 | A | 08 July 2022 |
| CN | 114543689 | A | 27 May 2022 | None | | | |
| CN | 114142927 | A | 04 March 2022 | None | | | |

Form PCT/ISA/210 (patent family annex) (July 2022)